(19) Europäisches Patentamt
European Patent Office
Office européen des brevets

(11) Veröffentlichungsnummer: **0 173 231 B1**

(12) # EUROPÄISCHE PATENTSCHRIFT

(45) Veröffentlichungstag der Patentschrift: **03.07.91**

(51) Int. Cl.[5]: **C08G 77/14**, C08L 83/04, D06M 15/65, D06M 15/256

(21) Anmeldenummer: **85110450.5**

(22) Anmeldetag: **20.08.85**

Die Akte enthält technische Angaben, die nach dem Eingang der Anmeldung eingereicht wurden und die nicht in dieser Patentschrift enthalten sind.

(54) **Organopolysiloxane mit Si-gebundenem Wasserstoff und SiC-gebundenen Epoxygruppen, Verfahren zu ihrer Herstellung und eine Verwendung dieser Organopolysiloxane.**

(30) Priorität: **23.08.84 DE 3431075**

(43) Veröffentlichungstag der Anmeldung:
**05.03.86 Patentblatt 86/10**

(45) Bekanntmachung des Hinweises auf die Patenterteilung:
**03.07.91 Patentblatt 91/27**

(84) Benannte Vertragsstaaten:
**AT BE CH DE FR GB IT LI NL**

(56) Entgegenhaltungen:
**DE-C- 1 272 550**
**US-A- 3 511 699**
**US-A- 4 004 059**

(73) Patentinhaber: **WACKER-CHEMIE GMBH**
**Prinzregentenstrasse 22**
**W-8000 München 22(DE)**

(72) Erfinder: **Huhn, Karl, Dr. Dipl.-Chem.**
**Schopenhauerweg 9**
**W-8263 Burghausen(DE)**
Erfinder: **Kaufmann, Rudolf, Dr. Dipl.-Chem.**
**Karl-Gross-Strasse 13**
**W-8263 Burghausen(DE)**

EP 0 173 231 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus US 4 004 059 (ausgegeben 17. Januar 1977, H. Deiner et al., Ciba-Geigy Corporation) ist es bereits bekannt, Fasern durch Tränken mit wäßrigen Emulsionen, die Polymer mit mindestens 4 Kohlenstoffatome je Gruppe aufweisenden perfluoralkylgruppen und Additionsprodukt von Olefin an Organopolysiloxan mit Si-gebundenem Wasserstoff enthalten, wobei das nach der Addition entstandene Produkt durchschnittlich mehr als 7 Kohlenstoffatome im Alkylrest aufweist, gleichzeitig öl- und wasserabweisend zu machen.

Es ist Aufgabe der Erfindung, Organopolysiloxane mit Si-gebundenem Wasserstoff bereitzustellen, die ohne Mitverwendung von organischem Lösungsmittel in Wasser emulgiert werden können, wobei die dabei erhaltenen wäßrigen Emulsionen auch bei verhältnismäßig hohem Organopolysiloxangehalt sehr beständig sind, was verhältnismäßig niedrigen Aufwand für Verpackung, Lagerung und Versand der Emulsionen bedingt, und wobei diese Organopolysiloxane den Fasern hohes Wasserabweisungsvermögen und angenehm weichen Griff verleihen, ohne das gleichzeitig durch die Polymeren mit den Perfluoralkylgruppen verliehene Ölabweisungsvermögen zu beeinträchtigen, und wobei das Wasser- und Ölabweisungsvermögen sowie der angenehme Griff der Fasern auch beim Reinigen der Fasern mit Wasser oder organischem Lösungsmittel erhalten bleibt. Diese Aufgabe wird durch die Erfindung gelöst.

Gegenstand der Erfindung sind durch Einheiten der Formel $R_3SiO_{1/2}$ endblockierte Organopolysiloxane aus

20 bis 90 Molprozent Einheiten der Formel $RR^1SiO$
3 bis 30 Molprozent Einheiten der Formel $RR^2SiO$
3 bis 30 Molprozent Einheiten der Formel $RR^3SiO$
3 bis 60 Molprozent Einheiten der Formel RHSiO
0 bis 60 Molprozent Einheiten der Formel $R_2SiO$,

worin R jeweils gleiche oder verschiedene Alkylreste mit 1 bis 4 Kohlenstoffatomen je Rest oder Phenylreste, $R^1$ gleiche oder verschiedene Alkylreste mit mindestens 6 Kohlenstoffatomen je Rest, $R^2$ gleiche oder verschiedene, gegebenenfalls alkylierte Aralkylreste und $R^3$ gleiche oder verschiedene, SiC-gebundene, einwertige organische Reste mit jeweils mindestens einer vicinalen Epoxygruppe je Rest bedeutet und die Summe der innerhalb der oben angegebenen Bereiche jeweils gewählten Prozentsatze 100 Molprozent beträgt.

US 4 046 930 (ausgegeben 6. September 1977, G.C. Johnson et al., Union Carbide Corporation) offenbart zwar ebenfalls Organopolysiloxane mit SiC-gebundenen, einwertigen organischen Resten mit jeweils mindestens einer vicinalen Epoxygruppe je Rest und z.B. Aralkylresten. Diese Druckschrift offenbart jedoch nicht die oben näher bezeichnete Kombination von Organosiloxaneinheiten und sie legt sie auch nicht nahe.

Vorzugsweise enthalten die erfindungsgemäßen, erfindungsgemäß hergestellten und erfindungsgemäß verwendeten Organopolysiloxane durchschnittlich 10 bis 1000 Siliciumatome je Molekül.

Die erfindungsgemäßen, erfindungsgemäß hergestellten und erfindungsgemäß verwendeten Organopolysiloxane können auch durch die Formel

$$R_3Si(OSiRR^1)_a(OSiRR^2)_b(OSiRR^3)_c(OSiRH)_d(OSiR_2)_eOSiR_3$$

wiedergegeben werden. In dieser Formel haben R, $R^1$, $R^2$ und $R^3$ jeweils die oben dafür angegebene Bedeutung.

$a + b + c + d + e = m$ = Zahl im Wert von 9 bis 1000
$a = 0{,}2\ m$ bis $0{,}9\ m$
$b = 0{,}03\ m$ bis $0{,}3\ m$
$c = 0{,}03\ m$ bis $0{,}3\ m$
$d = 0{,}03\ m$ bis $0{,}6\ m$
$e = 0\ m$ bis $0{,}6\ m$

Zusätzlich zu den Siloxaneinheiten der oben angegebenen Formel können noch andere Siloxaneinheiten vorliegen. Beispiele für solche anderen, meist jedoch lediglich als mehr oder weniger schwer vermeidbare Verunreinigungen vorliegende Siloxaneinheiten sind solche der Formeln $RSiO_{3/2}$, wobei R die oben dafür angegebene Bedeutung hat, und $SiO_{4/2}$. Vorzugsweise beträgt jedoch die Menge an solchen anderen Siloxaneinheiten als den Siloxaneinheiten in der oben angegebenen Formel mit den $R_3SiO_{1/2}$-Einheiten höchstens 1 Molprozent der insgesamt vorliegenden Organosiloxaneinheiten.

Als Rest R ist der Methylrest bevorzugt. Weitere Beispiele für Alkylreste R sind der Ethyl-, n-Propyl-, Isopropyl-, n-Butyl- und der sec.-Butylrest. Wenn Phenylreste R vorliegen, so vorzugsweise nur in Einheiten der Formel $R_2SiO$.

Vorzugsweise enthalten die Alkylreste $R^1$ höchstens 20 Kohlenstoffatome je Rest. Beispiele für Alkylreste $R^1$ sind der n-Hexylrest, Heptylreste, der 2-Ethylhexylrest, n-Decyl-n-Dodecyl-, n-Tetradecyl- und n-Pentadecylrest und Octadecylreste. Die Alkylreste $R^1$ können auch cyclisch sein, wie der Cyclohexylrest und Methylcyclohexylreste.

Vorzugsweise enthalten die gegebenenfalls alkylierten Aralkylreste $R^2$ insgesamt 8 bis 20 Kohlenstoffatome je Rest. Bevorzugt als Aralkylrest $R^2$ ist der 2-Phenylpropylrest. Beispiele für alkylierte Aralkylreste $R^2$ sind der 2-(2-Methylphenyl)-ethylrest und der 2-(4-Methylphenyl)-ethylrest.

Die organischen Reste $R^3$ mit mindestens einer vicinalen Epoxygruppe, also einer Epoxygruppe der Formel

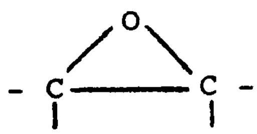 ,

sind vorzugsweise nur aus Kohlenstoff-, Wasserstoff- und Epoxysauerstoffatomen gegebenenfalls neben Ethersauerstoff- oder Carbonylsauerstoffatomen oder neben Ethersauerstoff- und Carbonylsauerstoffatomen aufgebaut.

Vorzugsweise enthalten die Reste $R^3$ höchstens 20 Kohlenstoffatome je Rest. Bevorzugt als Rest $R^3$ sind Reste der Formel

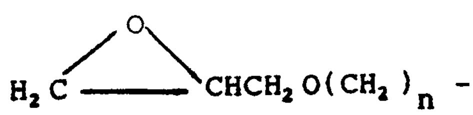 ,

worin n eine ganze Zahl im Wert von 3 bis 6, insbesondere 3 ist. Weitere Beispiele für Reste $R^3$ sind der 3,4-Epoxycyclohexyl-, 3,4-Epoxycyclohexyl-1-ethyl-, 3,4-epoxycyclohexyl, 6-methyl-, 3-Oxatricyclo [3,2,1,$0^{2,4}$] ‒ octan-6-propyl-, 7-Butyl-3-oxatricyclo [3,2,1,$0^{2,4}$] -octan-6-methyl-, 9,10-Epoxystearyl-, p-(2,3-Epoxybutyl)-phenyl- und der 3-(2,3-Epoxybutyl)-cyclohexylrest sowie der Rest der Formel

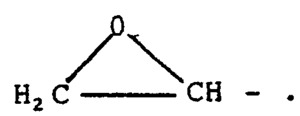

Gegenstand der Erfindung ist weiterhin ein Verfahren zur Herstellung von Organopolysiloxanen mit Si-gebundenem Wasserstoff und SiC-gebundenen Epoxygruppen durch Umsetzung von Organopolysiloxan, das Einheiten der Formel

$R_3SiO_{1/2}$ und RHSiO

und gegebenenfalls Einheiten der Formel

$R_2SiO$

enthält, mit organischer Verbindung, die je Molekül mindestens eine vicinale Epoxygruppe aufweist, aus Kohlenstoff-, Wasserstoff-und Epoxysauerstoffatomen gegebenenfalls neben Ethersauerstoff-und/oder Carbonylsauerstoffatomen aufgebaut ist und eine endständige Kohlenstoff-Kohlenstoff-Doppelbindung, in Gegenwart von die Anlagerung Si-gebundenen Wasserstoffs an aliphatische Kohlenstoff-Kohlenstoffbindung förderndem Katalysator, dadurch gekennzeichnet, daß Organopolysiloxan der Formel

$R_3Si(OSiRH)_{m-f}(OSiR_2)_fOSiR_3$ ,

worin R und m jeweils die oben dafür angegebene Bedeutung haben und f 0 oder eine Zahl im Wert von 1

bis 0,6 m ist, mit mindestens eine Epoxygruppe je Molekül enthaltender organischer Verbindung der vorstehend definierten Art in Mengen von 0,035 bis 0,54 Mol je Grammatom Si-gebundenen Wasserstoffs, mindestens einem Alken mit mindestens 6 Kohlenstoffatomen je Molekül in Mengen von 0,23 bis 0,91 Mol je Grammatom Si-gebundenen Wasserstoffs und
mindestens einem gegebenenfalls alkylierten Aralken in Mengen von 0,035 bis 0,54 Mol je Grammatom Si-gebundenen Wasserstoffs umgesetzt wird, wobei Epoxydgruppe(n) enthaltende organische Verbindung, Alken und Aralken, das ggf. alkyliert sein kann, in Mengen von insgesamt höchstens 0,97 Mol je Grammatom Si-gebundenen Wasserstoffs eingesetzt werden.
Als bei dem erfindungsgemäßen Verfahren zur Herstellung von bestimmten Organopolysiloxanen verwendete, mindestens eine Epoxygruppe enthaltende Verbindung ist selbstverständlich die Verbindung der Formel

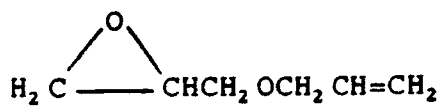

besonders bevorzugt. Als weiteres Beispiel für eine solche, mindestens eine Epoxygruppe enthaltende Verbindung sei 1-Allyl-3,4-epoxycyclohexan genannt.

Beispiele für Alkene mit mindestens 6 Kohlenstoffatomen je Molekül sind n-Hexen-1, n-Hepten-1, 2-Ethylhexen-6, n-Decen-1, n-Dodecen-1, n-Tetradecen-1, n-Pentadecen-1 und n-Octadecen-1 sowie Cyclohexen und Methylcyclohexene.

Das wichtigste Beispiel für ein Aralken ist alpha-Methylstyrol.

Bei dem erfindungsgemäßen Verfahren zur Herstellung von bestimmten Organopolysiloxanen können als die Anlagerung Si-gebundenen Wasserstoffs an aliphatische Kohlenstoff-Kohlenstoff-Doppelbindung fördernde Katalysatoren beliebige Katalysatoren dieser Art verwendet werden. Ein Beispiel für einen derartigen Katalysator ist $H_2PtCl_6.6H_2O$.

Das erfindungsgemäße Verfahren wird vorzugsweise in einem gegenüber Reaktionsteilnehmern und Katalysator inerten Lösungsmittel, z.B. einem Alkangemisch mit einem Siedebereich von 80° bis 110°C bei 1013 hPa (abs.) durchgeführt.

Das erfindungsgemäße Verfahren zur Herstellung von bestimmten Organopolysiloxanen kann bei beliebigen Temperaturen und Drücken durchgeführt werden, bei denen auch bisher die Anlagerung Si-gebundenen Wasserstoffs an aliphatische Kohlenstoff-Kohlenstoff-Doppelbindung in Gegenwart von diese Anlagerung förderndem Katalysator durchgeführt werden. Bevorzugt sind Temperaturen von 70° bis 150°C und der Druck der umgebenden Atmosphäre, also 1020 hPa oder etwa 1020 hPa.

Nach Beendigung des erfindungsgemäßen Verfahrens zur Herstellung von bestimmten Organopolysiloxanen wird der Katalysator vorzugsweise aus diesen Organopolysiloxanen entfernt, beispielsweise durch Zugabe von Aktivkohle und anschließendem Abfiltrieren, um Abspaltung von Si-gebundenem Wasserstoff zu verhindern.

Ebenso wird nach Beendigung des erfindungsgemäßen Verfahrens zur Herstellung bestimmter Organopolysiloxane und Entfernung des Katalysators aus diesen Organopolysiloxanen vorzugsweise das gegebenenfalls bei diesem Verfahren mitverwendete Lösungsmittel abgedampft.

Schließlich ist Gegenstand derErfindung auch ein Verfahren zum gleichzeitig Öl- und Wasserabweisendmachen von Fasern durch gleichzeitiges Auftragen von Polymer mit mindestens 3 Kohlenstoffatome je Gruppe aufweisenden Perfluoralkylgruppen und Additionsprodukt von Olefin an Organopolysiloxan mit Si-gebundenem Wasserstoff auf die Fasern, dadurch gekennzeichnet, daß als Additionsprodukt von Olefin an Organopolysiloxan mit Si-gebundenem Wasserstoff durch Einheiten der Formel $R_3SiO_{1/2}$ endblockiertes Organopolysiloxan aus
20 bis 90 Molprozent Einheiten der Formel $RR^1SiO$
3 bis 30 Molprozent Einheiten der Formel $RR^2SiO$
3 bis 30 Molprozent Einheiten der Formel $RR^3SiO$
3 bis 60 Molprozent Einheiten der Formel RHSiO
0 bis 60 Molprozent Einheiten der Formel $R_2SiO$,
worin R, $R^1$, $R^2$ und $R^3$ jeweils die oben dafür angegebene Bedeutung haben und die Summe der innerhalb der oben angegebenen Bereiche jeweils gewählten Prozentsätze 100 Molprozent ergibt, verwendet wird.

Vorzugsweise wird Organopolysiloxan der vorstehend definierten Art in Mengen von 50 bis 150 Gewichtsprozent, bezogen auf das Gesamtgewicht von Organopolysiloxan der vorstehend definierten Art und Polymer mit mindestens 4 Kohlenstoffatome je Gruppe aufweisenden Perfluoralkylgruppen, verwendet.

Bei den Fasern, die durch gleichzeitiges Auftragen von erfindungsgemäßem Organopolysiloxan und Polymer mit mindestens 3 Kohlenstoffatome je Gruppe aufweisenden Perfluoralkylgruppen auf die Fasern gleichzeitig öl- und wasserabweisend gemacht werden, kann es sich um anorganische Fasern, wie Asbest, einschließlich Asbestschäumen, oder Glasfasern, insbesondere solche, die für die Wärmeisolierung eingesetzt werden, handeln.

Vorzugsweise sind jedoch die Fasern, die durch gleichzeitiges Auftragen von erfindungsgemäßem Organopolysiloxan und Polymer mit mindestens 3 Kohlenstoffatome je Gruppe aufweisenden Perfluoralkylgruppen auf die Fasern gleichzeitig öl- und wasserabweisend gemacht werden, organische Fasern natürlicher und künstlicher Herkunft. Beispiele für derartige Fasern sind solche aus Keratin, insbesondere Wolle, Baumwolle, Rayon, Hanf, natürlicher Seide, Polypropylen, Polyethylen, Polyester, Polyurethan, Polyamid, Celluloseacetat und Gemische aus mindestens zwei solcher Faserarten. Besonders große Bedeutung hat das erfindungsgemäße Verfahren für die Behandlung von Fasern, die Cellulose enthalten oder aus Cellulose bestehen. Die Fasern können als Vliese, Fäden, Garne, Matten, Gewebe, gestrickte oder gewirkte Textilien, einschließlich Kleidungsstücken oder Teilen von Kleidungsstücken, vorliegen.

Das gleichzeitige Auftragen von erfindungsgemäßem Organopolysiloxan und Polymer mit mindestens 3 Kohlenstoffatome je Gruppe aufweisenden Perfluoralkylgruppen auf die öl- und wasserabweisend zu machenden Fasern kann in beliebiger für das Auftragen von Flüssigkeiten auf Fasern geeigneter und vielfach beschriebener Weise erfolgen, z. B. durch Tauchen, Streichen, Gießen, Sprühen, einschließlich Sprühen aus Aerosolverpackung, Walzen oder Klotzen erfolgen.

Als Polymer mit mindestens 3 Kohlenstoffatome je Gruppe aufweisenden Perfluoralkylgruppen können auch bei dem erfindungsgemäßen Verfahren zum Öl-und Wasserabweisendmachen von Fasern beliebige Perfluoralkylgruppen enthaltende Polymere verwendet werden, die in der eingangs erwähnten US 4 004 059, Spalte 1, Zeile 62 bis Spalte 2, Zeile 26 und in Beispiel 1 bis 6 erwähnt sind. (In Anspruch 1 von US 4 004 059 wird zwar gefordert, daß die Perfluoralkylgruppen mindestens 4 Kohlenstoffatome je Gruppe enthalten. Dabei wurde aber offensichtlich übersehen, daß sie gemäß Spalte 2, Zeile 23 auch nur 3 Kohlenstoffatome je Gruppe enthalten können).

Vorzugsweise sind, beispielsweise wegen der Verringerung von Umweltbelastungen und Kosten, im Gegensatz zu US 4 004 059 die erfindungsgemäßen Organopolysiloxane zumindest bevor sie mit Polymer mit mindestens 3 Kohlenstoffatome je Gruppe aufweisenden Perfluoroalkylgruppen vermischt werden, frei von organischem Lösungsmittel.

Es ist bevorzugt, bei dem erfindungsgemäßen Verfahren zum Öl- und Wasserabweisendmachen von Fasern, erfindungsgemäßes Organopolysiloxan und Polymer mit mindestens 3 Kohlenstoffatome je Gruppe aufweisenden Perfluoralkylgruppen in Form von einer wäßrigen Emulsion auf die Faser aufzutragen. Dazu kann das Polymer mit mindestens 3 Kohlenstoffatome je Gruppe aufweisenden Perfluoralkylgruppen, wie in US 4 004 059 beschrieben, in Wasser emulgiert werden.

Erfindungsgemäßes Organopolysiloxan wird jedoch vorzugsweise in Wasser ohne Mitverwendung von organischem Lösungsmittel, jedoch unter Mitverwendung von nichtionischen, anionischen oder kationischen Emulgatoren emulgiert. Vorzugsweise beträgt der Gehalt der so hergestellten wäßrigen Emulsionen 20 bis 65 Gewichtsprozent, insbesondere 35 bis 50 Gewichtsprozent, jeweils bezogen auf das Gesamtgewicht von erfindungsgemäßem Organopolysiloxan und Wasser.

Beispiele für nichtionische Emulgatoren sind Polyglykolether von Alkanolen, Phenol oder Alkylphenolen, wie Nonylphenolpolyglykolether, tert.-Butylphenolpolyglykolether, Polyoxyethylenisotridecylether und polyethylenglykoltrimethylnonylether, Polyoxyethylensorbitanhexastearate, Polyoxyethylensorbitanoleate und Dimethylsiloxan-Ethylenoxyd-Blockmischpolymerisate.

Beispiele für anionische Emulgatoren sind Alkylbenzolsulfonate und Natriumalkylarylpolyethylenglykolsulfonate.

Beispiele für kationische Emulgatoren sind Tetraalkylammoniumsalze, wie Tetraalkylammoniumchloride, z.B. Hexadecyltrimethylammoniumchlorid, sowie Säureamid-Ethylenoxyd-Addukte der Formel

$R^4CONH(CH_2CH_2O)_qH$

und Amin-Ethylenoxyd-Addukte der Formel

$R^4NH(CH_2CH_2O)_qH$,

worin $R^4$ jeweils einen Alkylrest mit 6 bis 30 Kohlenstoffatomen je Rest und q jeweils eine ganze Zahl im Wert von 1 bis 30 bedeutet. Die Amin-Ethylenoxyd-Addukte können auch in Form ihrer Salze mit anorganischen Säuren, wie Salzsäure, oder niedermolekularen organischen Säuren, wie Essigsäure, vorliegen.

Kationische Emulgatoren sind bevorzugt. Emulgatoren werden vorzugsweise in Mengen von 2 bis 15 Gewichtsprozent, insbesondere 5 bis 10 Gewichtsprozent, jeweils bezogen auf das Gewicht des zu emulgierenden Organopolysiloxans, eingesetzt.

Für die Herstellung der Emulsionen können beliebige, für die Herstellung von wäßrigen Emulsionen geeignete Geräte, wie schnellaufende Rührer, verwendet werden.

Selbstverständlich können bei dem erfindungsgemäßen Verfahren zum gleichzeitigen Öl- und Wasserabweisendmachen von Fasern zusätzlich zu Additionsprodukt von Olefin an Organopolysiloxan der erfindungsgemäß verwendeten Art, Polymer mit mindestens 3 Kohlenstoffatome je Gruppe aufweisenden Perfluoralkylgruppen und den zur Herstellung ihrer Auftragsform gegebenenfalls verwendeten Stoffen, wie Wasser und Emulgator, gegebenenfalls weitere Stoffe, insbesondere weitere Textilausrüstungsmittel, mitverwendet werden. Derartige weitere Stoffe sind beispielsweise sogenannte "Knitterfrei-Ausrüstungen", wie Dimethyloldihydroxyethylenharnstoff (DMDHEU) im Gemisch mit Zinknitrat, insbesondere wenn die gleichzeitig öl- und wasserabweisend zu machenden Fasern solche aus Cellulose sind oder Fasergemische sind, die Cellulosefasern enthalten.

Beispiel 1

In einem 2-1-Kolben, der mit Claisenaufsatz, Rührer, Rückflußkühler, Thermometer, Tropftrichter und Gaseinleitungsrohr ausgestattet ist, werden 300 g durch Trimethylsiloxygruppen endblockiertes Methylwasserstoffpolysiloxan mit einer Viskosität von 23 $mm^2.s^{-1}$ bei 25° C in 240 ml Alkangemisch mit einem Siedebereich von 80° bis 110° C bei 1013 hPa (abs.) unter Stickstoff auf etwa 105° C erwärmt. Nach Unterbrechen des Stickstoffstroms wird unter Rühren eine Mischung aus 88,5 g alpha-Methylstyrol und 0,47 ml einer 1 gewichtsprozentigen Lösung von $H_2PtCl_6.6H_2O$ in Isopropanol innerhalb von 20 Minuten zu dem übrigen Kolbeninhalt gegeben, wobei die Temperatur bei etwa 105° C gehalten wird. Dann wird noch 15 Minuten bei etwa 105° C weiter gerührt, wonach zu der so erhaltenen Mischung innerhalb von 100 Minuten bei 90° C eine Mischung aus 57,0 g der Verbindung der Formel

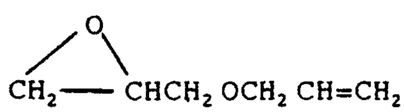 ,

630 g n-Dodecen-1 und 1,0 ml der 1 gewichtsprozentigen Lösung von $H_2PtCl_6.6H_2O$ in Isopropanol unter Rühren gegeben wird. Nachdem noch 30 Minuten bei 90° C weiter gerührt wurde, wird zu der so erhaltenen Mischung ein Gemisch aus 15 g der Epoxyverbindung der vorstehend angegebenen Formel und 0,12 ml der 1 gewichtsprozentigen Lösung von $H_2PtCl_6.6H_2O$ in Isopropanol innerhalb von 4 Minuten unter Rühren gegeben. Dadurch wird der Kolbeninhalt eine Stunde zum Sieden unter Rückfluß erwärmt, wobei seine Temperatur 135° bis 138° C beträgt. Schließlich werden die bis zu 150° C bei 1 hPa (abs.) siedenden Bestandteile des Kolbeninhalts abdestilliert. Der Rückstand wird mit Aktivkohle versetzt und filtriert. Es wird so ein klares, leicht bräunliches Öl mit einer Viskosität von 1077 $mm^2.s^{-1}$ bei 25° C erhalten. Die Ketten zwischen den Trimethylsiloxaneinheiten bestehen aufgrund der Bestimmung von Si-gebundenem Wasserstoff und Epoxydgruppen sowie des NMR-Spektrums aus

73,2 Molprozent Methyldodecylsiloxaneinheiten
11,8 Molprozent Methyl-2-phenylpropylsiloxaneinheiten
9,1 Molprozent Einheiten der Formel

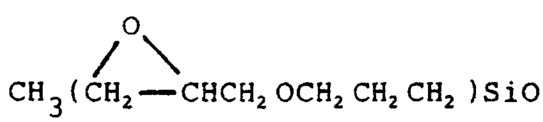

5,9 Molprozent Methylwasserstoffsiloxaneinheiten.

Beispiel 2

In dem 2-1-Kolben, der mit Claisenaufsatz, Rührer, Rückflußkühler, Thermometer, Tropftrichter und

Gaseinleitungsrohr ausgestattet ist, werden 743,7 g durch Trimethylsiloxygruppen endblockiertes Organopolysiloxan aus 50 Molprozent Dimethylsiloxaneinheiten und 50 Molprozent Methylwasserstoffsiloxaneinheiten in zufälliger Verteilung (engl.: random) mit einer Viskosität von etwa 30 $mm^2.s^{-1}$ bei 25 °C in 205 ml Alkangemisch mit einem Siedebereich von 80° bis 110 °C bei 1013 hPa (abs.) unter Stickstoff auf etwa 105 °C erwärmt. Nach Unterbrechen des Stickstoffstroms wird unter Rühren eine Mischung aus 52,5 g alpha-Methylstyrol und 0,133 ml der 1 gewichtsprozentigen Lösung von $H_2PtCl_6.6H_2O$ in Isopropanol innerhalb von 12 Minuten zu dem übrigen Kolbeninhalt gegeben, wobei die Temperatur bei etwa 105 °C gehalten wird. Dann wird noch 30 Minuten bei etwa 105 °C weiter gerührt, wonach zu der so erhaltenen Mischung innerhalb von 75 Minuten eine Mischung aus 399 g n-Dodecen-1 und 0,24 ml der 1 gewichtsprozentigen Lösung von $H_2PtCl_6.6H_2O$ in Isopropanol unter Rühren bei 120 °C gegeben wird. Nachdem noch 30 Minuten bei 120 °C weiter gerührt wurde, wird zu der so erhaltenen Mischung ein Gemisch aus 63,3 g Epoxyverbindung der in Beispiel 1 angegebenen Formel und 0,051 ml der 1 gewichtsprozentigen Lösung von $H_2PtCl_6.6H_2O$ in Isopropanol innerhalb von 15 Minuten unter Rühren gegeben. Danach wird der Kolbeninhalt 30 Minuten bei 120 °C weiter gerührt, mit Aktivkohle vermischt und in noch warmen Zustand filtriert. Schließlich werden die bis zu 120 °C bei 1 hPa (abs.) siedenden Bestandteile des Kolbeninhalts abdestilliert. Es wird so ein klares, farbloses Öl mit einer Viskosität von 190 $mm^2.s^{-1}$ bei 25 °C und einem Brechungsindex von 1,4339 bei 120 °C erhalten. Die Ketten zwischen den Trimethylsiloxaneinheiten bestehen aufgrund der Bestimmung von Si-gebundenem Wasserstoff und Epoxydgruppen sowie des NMR-Spektrums aus

50 Molprozent Dimethylsiloxaneinheiten
20,2 Molprozent Methyldodecylsiloxaneinheiten
4,1 Molprozent Methyl-2-phenylpropylsiloxaneinheiten
5,0 Molprozent Einheiten der Formel

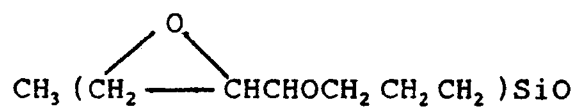

20,7 Molprozent Methylwasserstoffsiloxaneinheiten.

Beispiel 3

In dem 2-1-Kolben, der mit Claisenaufsatz, Rührer, Rückflußkühler, Thermometer, Tropftrichter und Gaseinleitungsrohr ausgestattet ist, werden 300 g des durch Trimethylsiloxygruppen endblockierten Methylwasserstoffpolysiloxans mit einer Viskosität von 23 $mm^2.s^{-1}$ bei 25 °C in 240 ml Alkangemisch mit einem Siedebereich von 80° bis 110 °C bei 1013 hPa (abs.) unter Stickstoff auf etwa 105 °C erwärmt. Nach Unterbrechen des Stickstoffstroms wird unter Rühren eine Mischung aus 88,5 g alpha-Methylstyrol und 0,47 ml der 1 gewichtsprozentigen Lösung von $H_2PtCl_6.6H_2O$ in Isopropanol innerhalb von 20 Minuten zu dem übrigen Kolbeninhalt gegeben, wobei die Temperatur des Kolbeninhalts auf 115 °C ansteigt. Dann wird noch 15 Minuten bei 140 °C weitergerührt, wonach zu der so erhaltenen Mischung innerhalb von 115 Minuten eine Mischung aus 630 g n-Dodecen-1 und 0,8 ml der 1 gewichtsprozentigen Lösung von $H_2PtCl_6.6H_2O$ in Isopropanol unter Rühren bei 108 bis 140 °C gegeben wird. Nachdem noch 30 Minuten bei 140 °C weiter gerührt wurde, wird zu der so erhaltenen Mischung ein Gemisch aus 62,7 g Epoxyverbindung der in Beispiel 1 angegebenen Formel und 0,55 ml der 1 gewichtsprozentigen Lösung von $H_2PtCl_6. 6H_2O$ in Isopropanol innerhalb von 25 Minuten bei 120° bis 140 °C gegeben. Danach wird der Kolbeninhalt eine Stunde innerhalb dieses Temperaturbereichs weiter gerührt. Schließlich werden die bis zu 150 °C bei 1 hPa (abs.) siedenden Bestandteils des Kolbeninhalts abdestilliert. Der Rückstand wird mit Aktivkohle versetzt und filtriert. Es wird so ein klares, leicht gelbliches Öl mit einer Viskosität von 1094 $mm^2.s^{-1}$ bei 25 °C erhalten. Die Ketten zwischen den Trimethylsiloxaneinheiten bestehen aufgrund der Bestimmung von Si-gebundenem Wasserstoff und Epoxydgruppen sowie des NMR-Spektrums aus

84,3 Molprozent Methyldodecylsiloxaneinheiten
7,5 Molprozent Methyl-2-phenylpropylsiloxaneinheiten
4,4 Molprozent Einheiten der Formel

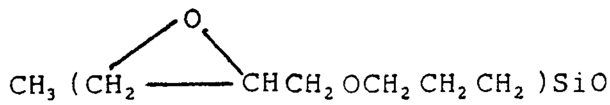

3,8 Molprozent Methylwasserstoffsiloxaneinheiten.

In den folgenden Beispielen wird als Gerät für die Herstellung der Emulsionen jeweils ein schnellaufender Rührer verwendet. Alle Angaben von Teilen und Prozentsätzen in diesen Beispielen beziehen sich auf das Gewicht, soweit nichts anderes angegeben ist.

Beispiel 4

35 Teile des gemäß Beispiel 1 hergestellten Organopolysiloxans werden mit 3 Teilen Hexadecyltrimethylammoniumchlorid und 3 Teilen Wasser vermischt. Aus der so erhaltenen Mischung wird durch Zugabe von 59 Teilen Wasser eine Emulsion bereitet.

Ein Gewebe aus 35 % Baumwolle und 65 % Polyester wird in eine Emulsion getaucht, die aus

30 g/l der gemäß Beispiel 8 von US 2 803 615 (ausgegeben 20. August 1957, A.H. Ahlbrecht et al., Minnesota Mining and Manufacturing Co.) hergestellten Emulsion von Perfluoralkylgruppen enthaltendem Polymer,

20 g/l Organopolysiloxan-Emulsion, deren Herstellung vorstehend beschrieben wurde, und

950g/l Wasser (zusätzlich zu dem in der Emulsion vorliegenden Wasser)

besteht, und dann auf 100 % Flüssigkeitsaufnahme abgequetscht. Danach wird das so imprägnierte Gewebe 10 Minuten auf 150° C erwärmt.

Das so erhaltene imprägnierte Gewebe hat einen angenehm weichen Griff. Die Ölabweisung wird nach AATCC 118-1966 , die Wasserabweisung nach dem sogenannten "Spraytest" (AATCC 22-1967) geprüft. Es werden folgende Werte erhalten:

Anzahl der Wäschen bei 60° C in einer

| | | |
|---|---|---|
| Haushaltwaschmaschine | 0 | 3 |
| Ölabweisung | 5 | 4 |
| Wasserabweisung | 100 | 100 |

Auch der Griff ist nach den Wäschen im wesentlichen unverändert.

Beispiel 5

35 Teile des gemäß Beispiel 2 hergestellten Organopolysiloxans werden mit 3 Teilen Hexadecyltrimethylammoniumchlorid und 3 Teilen Wasser vermischt. Aus der so erhaltenen Mischung wird durch Zugabe von 59 Teilen Wasser eine Emulsion bereitet. Gewebe aus 35 % Baumwolle und 65 % Polyester wird in eine Emulsion getaucht, die aus

30 g /l Emulsion von Perfluoralkylgruppen enthaltendem Polymer gemäß Beispiel 8 von US 2 803 615,

15 g /l Organopolysiloxan-Emulsion, deren Herstellung vorstehend beschrieben wurde,

50 g /l 45 %-iger wäßriger Lösung von DMDHEU,

5 g /l Zinknitrat und

900g/ l zusätzlichem Wasser

besteht, und dann auf 100 % Flüssigkeitsaufnahme abgequetscht. Danach wird das so imprägnierte Gewebe 10 Minuten auf 150° C erwärmt.

Das so erhaltene imprägnierte Gewebe hat einen angenehm weichen Griff. Bei der Prüfung auf Öl- und Wasserabweisung werden folgende Werte erhalten:

Anzahl der Wäschen bei 60° C in einer

| | | |
|---|---|---|
| Haushaltwaschmaschine | 0 | 3 |
| Ölabweisung (AATCC 118-1966 ) | 6 | 5 |
| Wasserabweisung (AATCC 22-1967) | 100 | 100 |

Auch der Griff ist nach den Wäschen im wesentlichen unverändert.

Beispiel 6

35 Teile des gemäß Beispiel 3 hergestellten Organopolysiloxans werden mit 3 Teilen Hexadecyltrimethylammoniumchlorid und 3 Teilen Wasser vermischt. Aus der so erhaltenen Mischung wird durch Zugabe von 59 Teilen Wasser eine Emulsion bereitet.

Polyamidgewebe wird in eine Emulsion getaucht, die aus
25 g/l Emulsion von Perfluoralkylgruppen enthaltendem Polymer gemäß Beispiel 8 von US 2 803 615
25 g/l Organopolysiloxan-Emulsion, deren Herstellung vorstehend beschrieben wurde, und
950g/l zusätzlichem Wasser
besteht, und dann auf 100 % Flüssigkeitsaufnahme abgequetscht. Danach wird das so imprägnierte Gewebe 10 Minuten auf 150° C erwärmt.

Das so erhaltene imprägnierte Gewebe hat einen angenehm weichen Griff. Bei der Prüfung auf Öl- und Wasserabweisung werden folgende Werte erhalten:
Anzahl der Wäschen bei 60° C in einer

| | | |
|---|---|---|
| Haushaltwaschmaschine | 0 | 3 |
| Ölabweisung (AATCC 118-1966 ) | 6 | 5 |
| Wasserabweisung (AATCC 22-1967) | 100 | 90 bis 100 |

Auch der Griff ist auch nach den Wäschen im wesentlichen unverändert.

**Ansprüche**

**1.** Durch Einheiten der Formel $R_3SiO_{1/2}$ endblockierte Organopolysiloxane aus
20 bis 90 Molprozent Einheiten der Formel $RR^1SiO$
3 bis 30 Molprozent Einheiten der Formel $RR^2SiO$
3 bis 30 Molprozent Einheiten der Formel $RR^3SiO$
3 bis 60 Molprozent Einheiten der Formel RHSiO
0 bis 60 Molprozent Einheiten der Formel $R_2SiO$,
worin R jeweils gleiche oder verschiedene Alkylreste mit 1 bis 4 Kohlenstoffatomen je Rest oder Phenylreste, $R^1$ gleiche oder verschiedene Alkylreste mit mindestens 6 Kohlenstoffatomen je Rest,$R^2$ gleiche oder verschiedene, gegebenenfalls alkylierte Aralkylreste und $R^3$ gleiche oder verschiedene, SiC-gebundene, einwertige organische Rest mit jeweils mindestens einer vicinalen Epoxygruppe je Rest bedeutet und die Summe der innerhalb der oben angegebenen Bereiche jeweils gewählten Prozentsätze 100 Molprozent beträgt.

**2.** Organopolysiloxane nach Anspruch 1,
**dadurch gekennzeichnet,**
daß sie durchschnittlich 10 bis 1000 Siliciumatome je Molekül enthalten.

**3.** Verfahren zur Herstellung von Organopolysiloxanen nach Anspruch 1 oder 2, durch Umsetzung von Organopolysiloxan, das Einheiten der Formel

$R_3SiO_{1/2}$ und RHSiO

und gegebenenfalls Einheiten der Formel

$R_2SiO$

enthält, wobei R jeweils die oben in Anspruch 1 dafür angegebene Bedeutung hat, mit organischer Verbindung, die je Molekül mindestens eine vicinale Epoxygruppe aufweist, aus Kohlenstoff-, Wasserstoff- und Epoxysauerstoffatomen gegebenenfalls neben Ethersauerstoff- und/oder Carbonylsauerstoffatomen aufgebaut ist und eine endständige Kohlenstoff-Kohlenstoff-Doppelbindung aufweist, in Gegenwart von die Anlagerung Si-gebundenen Wasserstoffs an aliphatische Kohlenstoff-Kohlenstoff-Doppelbindung förderndem Katalysator,
**dadurch gekennzeichnet,**
daß Organopolysiloxan der Formel

$R_3Si(OSiRH)_{m-f}(OSiR_2)_fOSiR_3)$

worin R die oben in Anspruch 1 dafür angegebene Bedeutung hat, m eine Zahl im Wert von 8 bis 1000 und f 0 oder eine Zahl im Wert von 1 bis 0,6 mist,
mit mindestens eine Epoxygruppe je Molekül enthaltender organischer Verbindung der vorstehend definierten Art in Mengen von 0,035 bis 0,54 Mol je Grammäquivalent Si-gebundenen Wasserstoffs
mindestens einem Alken mit mindestens 6 Kohlenstoffatomen je Molekül in Mengen von 0,23 bis 0,91 Mol je Grammäquivalent Si-gebundenen Wasserstoffs und
mindestens einem Aralken in Mengen von 0,035 bis 0,54 Mol je Grammatom Si-gebundenen Wasserstoffs
umgesetzt wird, wobei Epoxygruppe(n) enthaltende organische Verbindung, Alken und Aralken, das gegebenenfalls alkyliert sein kann, in Mengen von insgesamt höchstens 0,97 Mol je Grammatom Si-gebundenen Wasserstoffs eingesetzt werden.

4. Verfahren zum gleichzeitigen öl- und wasserabweisendmachen von Fasern durch gleichzeitiges Auftragen von Polymer mit mindestens 3 Kohlenstoffatome je Gruppe aufweisenden Perfluoralkylgruppen und Additionsprodukt von Olefin an Organopolysiloxan mit Si-gebundenem Wasserstoff auf die Fasern,
**dadurch gekennzeichnet,**
daß als Additionsprodukt von Olefin an Organopolysiloxan mit Si-gebundenem Wasserstoff Organopolysiloxan nach Anspruch 1 verwendet wird.

## Claims

1. Organopolysiloxane terminated by units of the formula $R_3SiO_{1/2}$ and comprising
20 to 90 mol per cent of units of the formula $RR^1SiO$
3 to 30 mol per cent of units of the formula $RR^2SiO$
3 to 30 mol per cent of units of the formula $RR^3SiO$
3 to 60 mol per cent of units of the formula RHSiO
0 to 60 mol per cent of units of the formula $R_2SiO$,
wherein R represents in each case identical or different alkyl radicals having from 1 to 4 carbon atoms per radical, or phenyl radicals, $R^1$ represents identical or different alkyl radicals having at least 6 carbon atoms per radical, $R^2$ represents identical or different, optionally alkylated aralkyl radicals and $R^3$ represents identical or different, SiC-bonded, monovalent organic radicals [sic] having in each case at least one vicinal epoxy group per radical, and the sum of the percentages chosen within the above-specified ranges is 100 mol percent in each case.

2. Organopolysiloxanes according to Claim 1, characterized in that they contain, on average, from 10 to 1000 silicon atoms per molecule.

3. Process for the preparation of organopolysiloxanes according to Claim 1 or 2, by reacting organopolysiloxanes that contain [sic] units of the formulae

$R_3Si0_{1/2}$ and RHSiO

and optionally units of the formula

$R_2SiO$

wherein each R has the meaning given in Claim 1 above, with an organic compound that has per molecule at least one vicinal epoxy group, is composed of carbon, hydrogen and epoxy-oxygen atoms, optionally in addition to ether-oxygen and/or carbonyl-oxygen atoms, and has a terminal carbon-carbon double bond, in the presence of a catalyst promoting the addition of Si-bonded hydrogen to the aliphatic carbon-carbon double bond, characterized in that an organopolysiloxane of the formula

$R_3Si(OSiRH)_{m-f}(OSiR_2)_fOSiR_3$,

wherein R has the meaning given in Claim 1 above, m is a number from 8 to 1000 and f is 0 or is from 1 to 0.6 m, is reacted with an organic compound of the type defined above having at least one epoxy group per molecule in amounts of from 0.035 to 0.54 mol per gram-equivalent of Si-bonded hydrogen, at least one alkene having at least 6 carbon atoms per molecule in amounts of from 0.23 to 0.91 mol per gram-equivalent of Si-bonded hydrogen, and at least one aralkene in amounts of from 0.035 to 0.54 mol per gram-atom of Si-bonded hydrogen, the organic compound containing epoxy group (s), the alkene and the aralkene, which may optionally be alkylated, being used in amounts totalling at most 0.97 mole per gram-atom of Si-bonded hydrogen.

4. Process for simultaneously rendering fibres oil-and water-repellent by simultaneously applying to the fibres a polymer with perfluoroalxyl groups having at least 3 carbon atoms per group and an addition product of an olefin and an organopolysiloxane having Si-bonded hydrogen, characterized in that, as the addition product of an olefin and an organopolysiloxane with Si-bonded hydrogen, there is used an organopolysiloxane according to Claim 1.

**Revendications**

1. Polyorganosiloxanes à radicaux $R_3SiO_{1/2}$ terminaux qui sont constitués :
de 20 à 90 % en moles de motifs de formule $RR^1SiO$
de 3 à 30 % en moles de motifs de formule $RR^2SiO$
de 3 à 30 % en moles de motifs de formule $RR^3SiO$
de 3 à 60 % en moles de motifs de formule RHSiO
de 0 à 60 % en moles de motifs de formule $R_2SiO$,
formules dans lesquelles les R représentent chacun, indépendamment les uns des autres, un alkyle contenant de 1 à 4 atomes de carbone par radical ou un radical phényle, les $R^1$ représentent chacun, indépendamment les uns des autres, un alkyle à au moins 6 atomes de carbone par radical, les $R^2$ représentent chacun, indépendamment les uns des autres, un aralkyle éventuellement alkylé, et les $R^3$ représentent chacun, indépendamment les uns des autres, un radical organique univalent, relié par une liaison du type Si-C, qui contient au moins un radical époxy vicinal par radical,
la somme des pourcentages choisis chacun à l'intérieur des intervalles indiqués ci-dessus étant égale à 100 % en moles.

2. Polyorganosiloxanes selon la revendication 1 caractérisés en ce qu'ils contiennent en moyenne de 10 à 1000 atomes de silicium par molécule.

3. Procédé pour préparer des polyorganosiloxanes selon l'une des revendications 1 et 2, par réaction de polyorganosiloxanes contenant des motifs de formule :

$R_3SiO1/2$ et RHSiO

et éventuellement des motifs de formule :

$R_2SiO$,

formules dans lesquelles les R ont chacun la signification qui leur a été donnée à la revendication 1, avec un composé organique qui contient, par molécule, au moins un radical époxy vicinal, qui est constitué d'atomes de carbone, d'hydrogène et d'oxygène époxydique avec en plus, éventuellement, des atomes d'oxygène d'éther et/ou des atomes d'oxygène de carbonyle, et qui renferme une double liaison carbone-carbone terminale, en présence d'un catalyseur accélérant la fixation d'hydrogène lié à Si sur une double liaison carbone-carbone aliphatique, procédé caractérisé en ce qu'on fait réagir un

polyorganosiloxane répondant à la formule :

$R_3Si\ (OSiRH)_{m-f}\ (OSiR_2)_fOSiR_3$

dans laquelle R a la signification qui lui a été donnée à la revendication 1, m désigne un nombre de 8 à 1000 et f est égal à 0 ou représente un nombre de 1 à 0,6 m, avec :

- au moins un composé organique contenant au moins un radical époxy par molécule, du type défini ci-dessus, en des quantités de 0,035 à 0,54 mol par équivalent-gramme d'hydrogène lié à Si,
- au moins un alcène contenant au moins 6 atomes de carbone par molécule, en des quantités de 0,23 à 0,91 mol par équivalent-gramme d'hydrogène lié à Si, et
- au moins un aralcène, en des quantités de 0,035 à 0,54 mol par atome-gramme d'hydrogène lié à Si,

le composé organique qui contient un ou des radicaux époxy, l'alcène et l'aralcène éventuellement alkylé étant mis en jeu en des quantités représentant au total au plus 0,97 mol par atome-gramme d'hydrogène lié à Si.

**4.** Procédé pour rendre en même temps oléofuges et hydrofuges des fibres, par application simultanée, sur les fibres, d'un polymère à radicaux perfluoralkyles contenant au moins 3 atomes de carbone par radical et d'un produit d'addition d'une oléfine sur un polyorganosiloxane à hydrogène lié à Si, procédé caractérisé en ce qu'on utilise, comme produit d'addition d'une oléfine sur un polyorganosiloxane à hydrogène lié à Si, un polyorganosiloxane selon la revendication 1.